# EUROPEAN PATENT APPLICATION

(11) **EP 3 798 999 A1**
(43) Date of publication of application: **31.03.2021**
(21) Application number: 19806637.5
(22) Date of filing: 16.04.2019
(51) Int. Cl.: G07D 11/12, E05B 65/00, G07D 11/00, G07D 11/16

(54) **BANKNOTE STORAGE CONTAINER HANDLING SYSTEM**

(30) Priority: 22.05.2018 JP 2018097808
(71) Applicant: Japan Cash Machine Co., Ltd., Osaka-shi, Osaka 547-0035 (JP)
(72) Inventor: UEMIZO Yoshiaki, Osaka-shi, Osaka 547-0035 (JP); UEDA Takashi, Osaka-shi, Osaka 547-0035 (JP)
(74) Representative: TBK
(86) International application number: PCT/JP2019/016234
(87) International publication number: WO 2019/225217

(57) **Abstract**

A banknote storage container handling system includes a transporter (200) that transports a banknote storage container (10), an unlock unit (300) located adjacent to the transporter (200) to unlock the banknote storage container (10), a detector (220) that searches the banknote storage container (10) for an identifier, and a controller (100) that determines a surface of the banknote storage container (10) having a keyhole (12) based on data obtained from the detector (220), and controls the unlock unit (300) to unlock the banknote storage container (10).

## Description

### FIELD

The present invention relates to a technique for a banknote storage container handling system for handling a banknote storage container storing banknotes.

### BACKGROUND

A known automatic banknote handling system transports and sorts banknotes. For example, Japanese Unexamined Patent Application Publication No. 62-92095 (Patent Literature 1) describes a cash handling apparatus incorporating an articulated robot. The cash handling apparatus described in Patent Literature 1 includes a banknote receiving and aligning unit, a banknote counting and sorting unit, a cash cassette unit, a banknote counter unit, a banknote dispenser unit, and a banknote transfer mechanism including the articulated robot. The banknote receiving and aligning unit receives and aligns banknotes, and passes the banknotes to a robot hand. The banknote counting and sorting unit receives the banknotes from the robot hand and counts and sorts the banknotes. The cash cassette unit stores the banknotes received from the robot hand in a container, and pulls and removes the banknotes from the container and passes the banknotes to the robot hand. The banknote counter unit receives the banknotes, verifies the count, and passes the banknotes to the robot. The banknote dispenser unit receives the banknotes from the robot and feeds the banknotes to a dispensing slot. The banknote transfer mechanism transfers the banknotes between these units using the articulated robot.

Japanese Unexamined Patent Application Publication No. 2016-31619 (Patent Literature 2) describes a storage work device, a valuable medium storage system, and a storage work method. A work robot described in Patent Literature 2 captures an image of the appearance of a cassette with a camera mounted on the head of the work robot, and identifies the type of the cassette though image processing. The work robot opens the cassette using a tool and a procedure defined for the type of the cassette. The work robot then captures an image of the inside of the cassette, and detects any abnormality through image processing. The work robot also captures an image of a banknote sorter, and identifies banknotes to be removed through image processing. The work robot then removes the banknotes from the banknote sorter and stores the banknotes into the cassette. The work robot closes the cassette using a tool and a procedure defined for the type of the cassette.

Japanese Unexamined Patent Application Publication No. 2016-224664 (Patent Literature 3) describes a valuable medium processing system and a valuable medium processing method. A banknote handling system described in Patent Literature 3 moves a bundle of banknotes tied with a currency strap, with a work robot holding the banknote bundle, to a position at which the bundle can be unstrapped by a bundle unstrapping unit. The bundle unstrapping unit cuts and removes the strap from the banknote bundle. The work robot then stores the bundle into the cassette. This system can use a bundle of banknotes tied with a currency strap to replenish the cassette, and thus efficiently stores banknotes in the cassette.

### CITATION LIST

### PATENT LITERATURE

Patent Literature 1: Japanese Unexamined Patent Application Publication No. 62-92095
Patent Literature 2: Japanese Unexamined Patent Application Publication No. 2016-31619
Patent Literature 3: Japanese Unexamined Patent Application Publication No. 2016-224664

### BRIEF SUMMARY

### TECHNICAL PROBLEM

An object of the present invention is to provide a banknote storage container handling system for automatically unlocking or opening a banknote storage container storing banknotes.

### SOLUTION TO PROBLEM

A banknote storage container handling system according to one aspect of the present invention includes a transporter that transports a banknote storage container, an unlock unit located adjacent to the transporter to unlock the banknote storage container, a detector that searches the banknote storage container for an identifier, and a controller that determines a surface of the banknote storage container having a keyhole based on data obtained from the detector, and controls the unlock unit to unlock the banknote storage container.

### ADVANTAGEOUS EFFECTS

The above aspect of the present invention provides a banknote storage container handling system that is easy to use.

### BRIEF DESCRIPTION OF DRAWINGS

Fig. 1 is a plan view of an automatic banknote handling system 1 according to an embodiment.
Fig. 2 is a front view of the automatic banknote handling system 1 according to the embodiment.
Fig. 3 is a functional block diagram of the automatic banknote handling system 1 according to the embodiment.
Fig. 4 is a flowchart showing a procedure performed by the automatic banknote handling system 1 according to the embodiment.
Fig. 5 is a perspective view of a banknote storage container 10 according to the embodiment with a lid 11 being open.
Fig. 6 is a perspective view of a transporter 200 according to the embodiment.
Fig. 7 is a perspective view of a reverser 210 according to the embodiment.
Fig. 8 is a perspective view of the transporter 200 according to the embodiment with the banknote storage container 10 mounted on the transporter.
Fig. 9 is a perspective view of the transporter 200 according to the embodiment having the banknote storage container 10 transported to an RFID antenna 220.
Fig. 10 is a perspective view of the reverser 210 according to the embodiment having the banknote storage container 10 mounted on the reverser.
Fig. 11 is a perspective view of the reverser 210 according to the embodiment with the turntable 211 lifted.
Fig. 12 is a perspective view of the reverser 210 according to the embodiment with the turntable 211 turned.
Fig. 13 is a front view of a first arm 300 according to the embodiment.
Fig. 14 is a perspective view of the first arm 300 according to the embodiment.
Fig. 15 is a front view of the second arm 400 according to the embodiment.
Fig. 16 is a plan view of the second arm 400 according to the embodiment.
Fig. 17 is a perspective view of the second arm 400 according to the embodiment.
Fig. 18 is a flowchart showing an unlocking process for the banknote storage container 10 according to the embodiment.
Fig. 19 is a perspective view of the second arm 400 and the banknote storage container 10 according to the embodiment when the second arm 400 captures an image of a keyhole 12.
Fig. 20 is a perspective view of the first arm 300 and the banknote storage container 10 according to the embodiment when the first arm 300 has moved to face the keyhole 12.
Fig. 21 is a perspective view of the first arm 300 and the banknote storage container 10 according to the embodiment when the first arm 300 is unlocking the container 10.
Fig. 22 is a perspective view of the second arm 400 and the banknote storage container 10 according to the embodiment when banknotes are removed from the banknote storage container 10.
Fig. 23 is a functional block diagram of the automatic banknote handling system 1 according to a sixth embodiment.

### DETAILED DESCRIPTION

Embodiments of the present invention will now be described with reference to the drawings. The same components are herein given the same reference numerals. Those components have the same names and functions, and will not be described repeatedly.

### First Embodiment

### Overall Configuration of Automatic Banknote Handling System 1

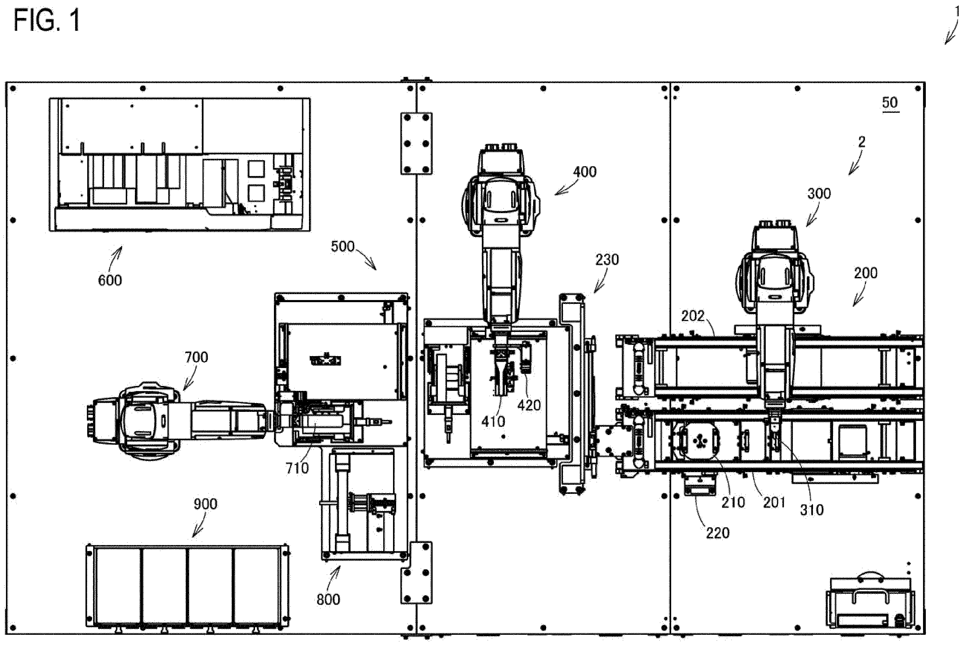

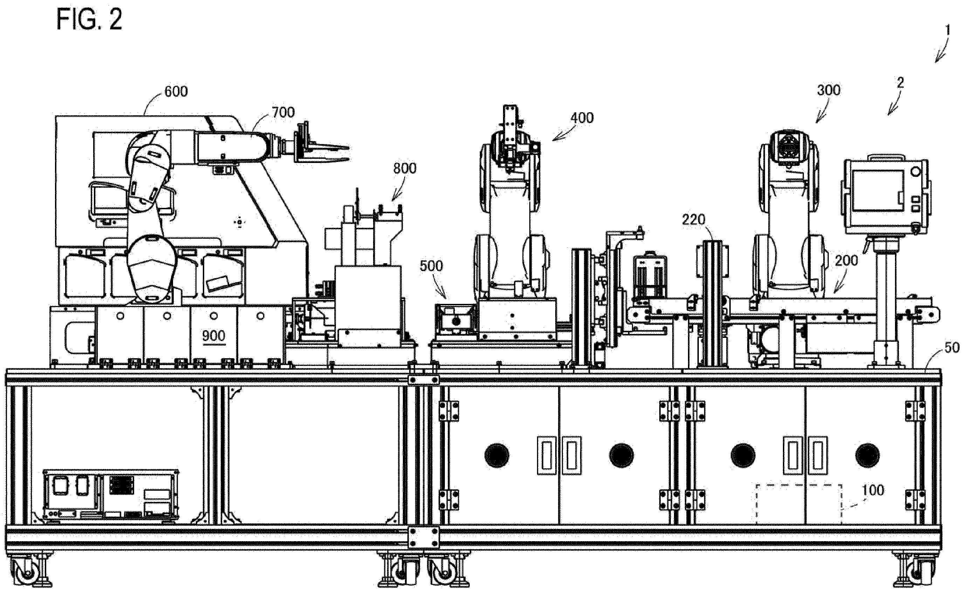

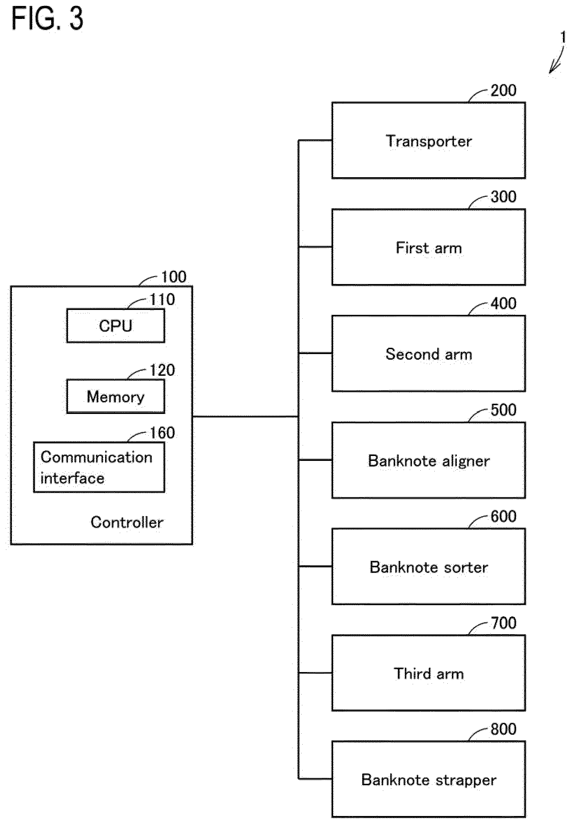

As shown in Figs. 1 to 3, an automatic banknote handling system 1 according to the present embodiment mainly includes a controller 100, a transporter 200, a first arm 300, a second arm 400, a banknote aligner 500, a banknote sorter 600, a third arm 700, a banknote strapper 800, and storage boxes 900. In the present embodiment, the transporter 200, the first arm 300, the second arm 400, the banknote aligner 500, the banknote sorter 600, the third arm 700, the banknote strapper 800, and the storage boxes 900 are mounted on a base 50, and the controller 100 is located under the base 50.

The controller 100 includes a memory 120, which stores various programs and data, a communication interface 160, which transmits and receives data to and from the units included in the automatic banknote handling system 1, or specifically the transporter 200, the first arm 300, the second arm 400, the banknote aligner 500, the third arm 700, and the banknote strapper 800, and a central processing unit (CPU) 110, which controls the controller 100 and the units in the automatic banknote handling system 1 through the communication interface 160 in accordance with programs.

The units in the automatic banknote handling system 1 associated with transporting, unlocking, and opening of the banknote storage container 10 and also removal of banknotes from the container, and so on, are collectively referred to as a banknote storage container handling system 2 or an unlocking system 2.

### Operation Overview of Automatic Banknote Handling System 1

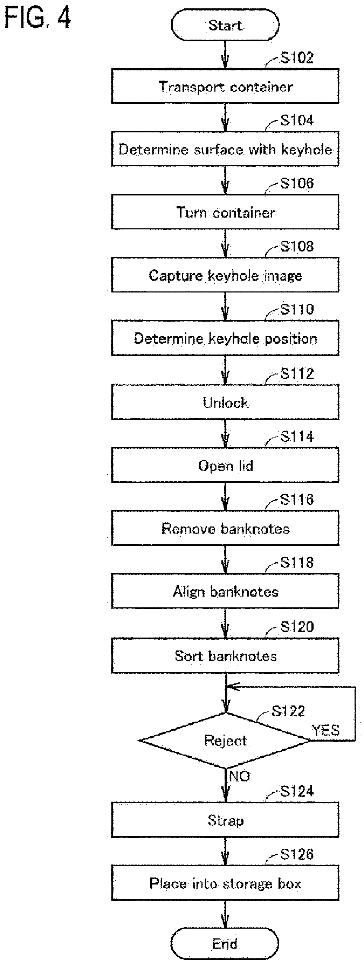

The operation of the automatic banknote handling system 1 according to the present embodiment will now be described with reference to Figs. 1 to 4.

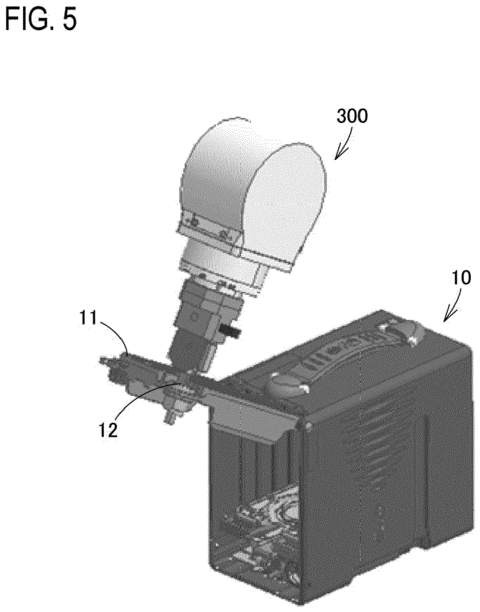

The transporter 200 transports the banknote storage container 10 (refer to Fig. 5) in response to a command from the controller 100 (step S102). The transporter 200 transports the banknote storage container 10, which is brought into the room containing the automatic banknote handling system 1, to near the first arm 300. In the present embodiment, the transporter 200 includes a first conveyor 201, a second conveyor 202, a reverser 210, a radio frequency identification (RFID) antenna 220, and a transfer unit 230.

The controller 100 determines one surface of the banknote storage container 10 having a keyhole 12, or the surface having a lid 11, based on data received from the RFID antenna 220 (step S104). As described in detail later, the banknote storage container 10 in the present embodiment has an RFID tag attached to its one surface having no keyhole 12. When the RFID antenna 220 detects an RFID tag, the controller 100 determines, based on a signal from the RFID antenna 220, that the lid 11 and the keyhole 12 are on the surface opposite to the RFID antenna 220, and directly passes the banknote storage container 10 to the transfer unit 230.

In the present embodiment, the transfer unit 230, which includes slides 231 and 232, transports the banknote storage container 10 from the first conveyor 201 to the second conveyor 202.

When the RFID antenna 220 detects no RFID tag, the controller 100 determines, based on a signal from the RFID antenna 220, that the banknote storage container 10 has the lid 11 and the keyhole 12 on its surface facing the RFID antenna 220. The controller 100 uses the reverser 210 to turn the banknote storage container 10 to have the surface with the lid 11 and the keyhole 12 facing the first arm 300 (step S106). The controller 100 passes the turned banknote storage container 10 to the second conveyor 202.

The first arm 300 includes a key 310 for unlocking the lid 11 of the banknote storage container 10. As described later, the first arm 300 moves the key 310 front and back, right and left, and up and down or rotates the key 310 in response to a command from the controller 100 and inserts the key 310 into the keyhole 12 of the banknote storage container 10. In response to a command from the controller 100, the first arm 300 rotates the key 310 to unlock the banknote storage container 10, and then opens the lid 11. In detail, the controller 100 uses data indicating the vertical position of the keyhole 12 obtained from a camera and data indicating the angle of rotation of the keyhole 12 to correct the angle of rotation of the key 310 (by rotating the arm) before moving the first arm 300 to the keyhole 12.

The second arm 400 includes a gripper 410 for picking banknotes. In response to a command from the controller 100, the second arm 400 moves the gripper 410 front and back, right and left, and up and down and picks banknotes stored in the banknote storage container 10, removes the banknotes, or places the banknotes onto the banknote aligner 500.

The controller 100 controls the first arm 300 to lock the banknote storage container 10. The controller 100 controls the second conveyor 202 of the transporter 200 to transport the empty banknote storage container 10 out of the room.

As described in detail later, the second arm 400 has a camera 420 mounted near the gripper 410 in the present embodiment. The control described below is performed. The controller 100 operates the transporter 200 to move the banknote storage container 10 to a position near and facing the first arm 300. The controller 100 operates the camera 420 on the second arm 400 to capture an image of the front face of the banknote storage container 10 (step S108). The controller 100 determines the position of the keyhole 12 based on the image data (step S110). The controller 100 controls the first arm 300 to move the key 310 to the keyhole 12 and insert the key 310 into the keyhole 12. The controller 100 controls the first arm 300 to turn the key 310 (step S112). The controller 100 controls the first arm 300 to open the lid of the banknote storage container 10 (step S114). The controller 100 controls the second arm 400 to move the gripper 410 into the banknote storage container 10. The controller 100 controls the second arm 400 to pick the banknotes using the gripper 410. The controller 100 controls the second arm 400 to pull and remove the banknotes (step S116). The controller 100 controls the second arm 400 to turn the gripper 410 by 90° to allow the banknotes to stand upright on their edges. The controller 100 controls the second arm 400 to place the banknotes in the banknote aligner 500.

In response to a command from the controller 100, the banknote aligner 500 aligns the banknotes. More specifically, the banknote aligner 500 aligns the edges of a bundle of banknotes (step S118). More specifically, the banknote aligner 500 in the present embodiment uses a plate to laterally support the standing banknotes placed by the second arm 400 to prevent the banknotes from falling. The banknote aligner 500 then vibrates the banknotes using a vibrator (not shown) to align the lower edges and the lateral edges of the standing banknotes. The banknote aligner 500 in the present embodiment can also align the upper edges of the vibrating banknotes by pressing the banknotes with a plate above while the banknotes are being vibrated.

The controller 100 controls the second arm 400, which has been in a standby state during the aligning process, to pick the aligned banknotes again. The controller 100 controls the second arm 400 to place the aligned banknotes in an entrance slot of the banknote sorter 600. In the present embodiment, the controller 100 controls the second arm 400 to push the banknotes placed in the entrance slot inward with the tip of the gripper 410. The banknote sorter 600 sorts the banknotes from the second arm 400 by their denominations, and stores the banknotes separately for each denomination (step S120).

In the present embodiment, the banknote sorter 600 may reject an unsorted banknote. When the banknote sorter 600 rejects a banknote (Yes in step S122), the controller 100 controls the third arm 700 to pick a rejected banknote using the gripper 710. The controller 100 controls the second arm 400 to receive the rejected banknote from the third arm 700 using the gripper 410. The controller 100 then places the banknote again in the entrance slot of the banknote sorter 600 (step S120).

In the present embodiment, the banknote sorter 600, when sorting the banknotes, displays the counts of banknotes sorted and stored for each denomination. The banknote sorter 600 stops sorting when the count of banknotes reaches a predetermined number for each denomination, for example, 100. In the present embodiment, the third arm 700 also has a camera. Using an image captured with the camera, the controller 100 obtains the count of sorted banknotes for each denomination. When the banknotes sorted for any denomination reach a predetermined count, the controller 100 controls the third arm 700 to pick the banknotes and pass the banknotes to the banknote strapper 800 using the gripper 710. The banknote aligner 500 may preferably align the banknotes again before passing the banknotes to the banknote strapper 800.

The banknote strapper 800 straps a bundle of a predetermined number of banknotes (step S124). The controller 100 controls the third arm 700 to pick the strapped bundle of banknotes and place the banknotes in one of the storage boxes 900. In the present embodiment, each storage box 900 receives banknotes of its corresponding denomination. The controller 100 controls the third arm 700 to place banknotes of the same denomination tied with a strap into the corresponding storage box 900 intended for the denomination (step S126).

As described above, the automatic banknote handling system 1 according to the present embodiment automatically sorts banknotes stored in the locked banknote storage container 10 by their denominations into each strapped bundle of a predetermined number of banknotes of the same denomination. The automatic banknote handling system 1 thus allows safer and more convenient handling of banknotes.

In the above embodiment, the third arm 700 has the camera, and the controller 100 determines whether the count of banknotes of each denomination reaches a predetermined number using an image captured with the camera. However, the banknote sorter 600 may transmit data indicating the count of banknotes sorted for each denomination or a notification that the banknote count reaches a predetermined number to the controller 100. In this case, the third arm 700 may have no camera.

### Configuration of Banknote Storage Container Handling System 2

The configuration of a banknote storage container handling system 2 according to the present embodiment will now be described.

### Structure of Transporter 200

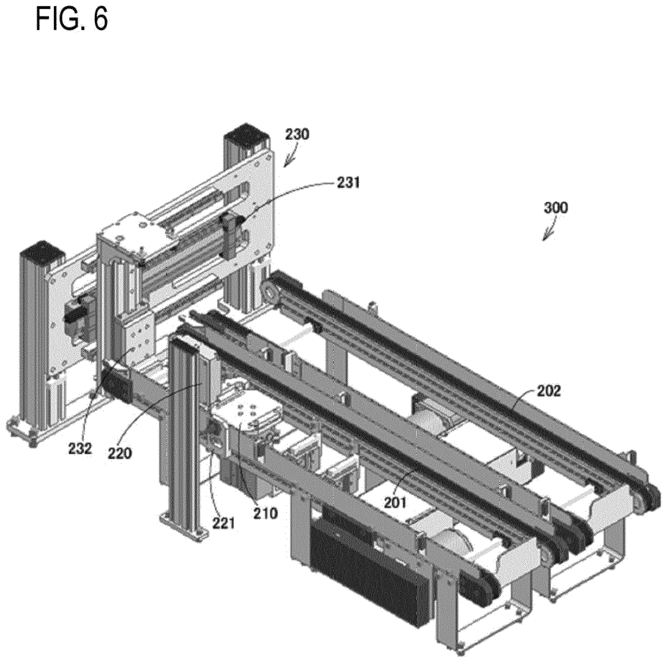

The transporter 200 will now be described. Referring to Fig. 6, the transporter 200 includes a conveyor 201 on the entrance of the banknote storage container 10, a conveyor 202 on the exit of the banknote storage container 10, a reverser 210, a proximity sensor 221, and an RFID antenna 220.

In response to a command from the controller 100, the conveyors 201 and 202 transport the banknote storage container 10.

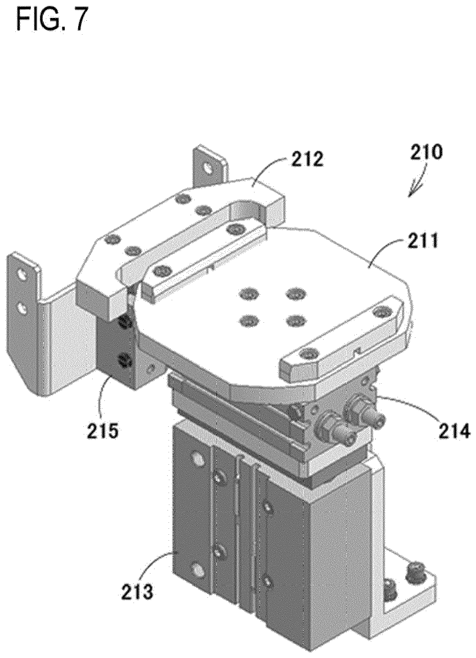

In response to a command from the controller 100, the reverser 210 reverses the banknote storage container 10 horizontally by 180°. In more detail, as shown in Fig. 7, the reverser 210 includes a turntable 211, onto which the banknote storage container 10 is placed, a guide 212, which stops the banknote storage container 10 at a predetermined position on the conveyor 201, a lifting cylinder 213, which lifts the turntable 211, a turning cylinder 214, which turns the turntable 211, and a guide cylinder 215.

In the embodiment, a photoelectric sensor is used to detect the position of the banknote storage container 10 on the conveyor 201 or 202.

### Operation of Transporter 200

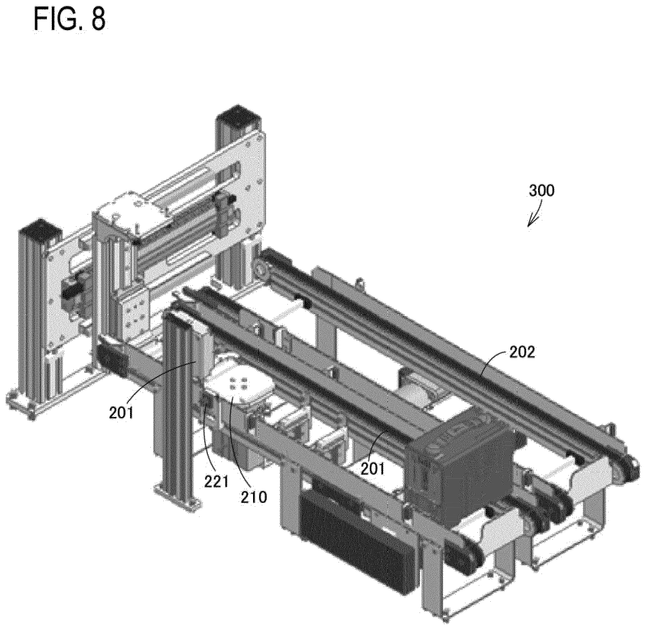

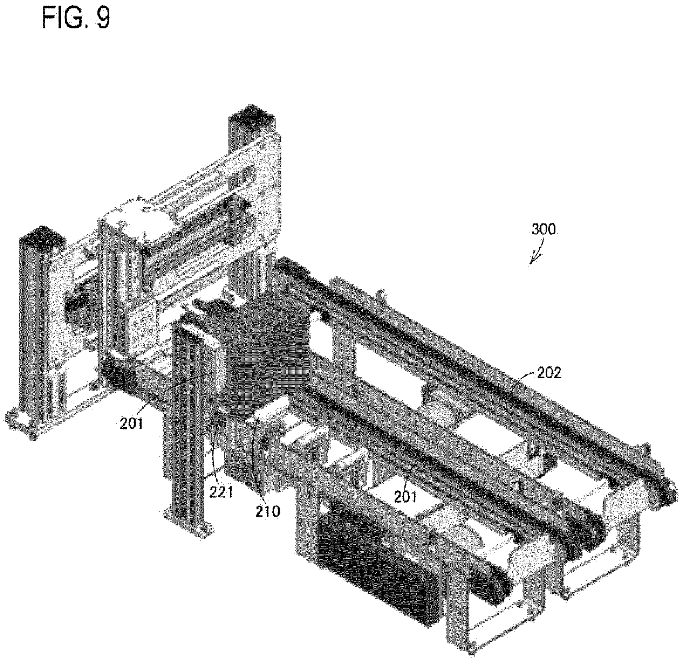

In the present embodiment, as shown in Fig. 8, the controller 100 controls the conveyor 201 to transport the banknote storage container 10 when the conveyor 201 receives the banknote storage container 10. As shown in Fig. 9, the banknote storage container 10 stops when touching the guide 212 of the reverser 210. In the present embodiment, the proximity sensor 221 detects the banknote storage container 10, and transmits the detection result to the controller 100. The controller 100 switches on the RFID antenna 220, which then searches for an RFID tag on the banknote storage container 10.

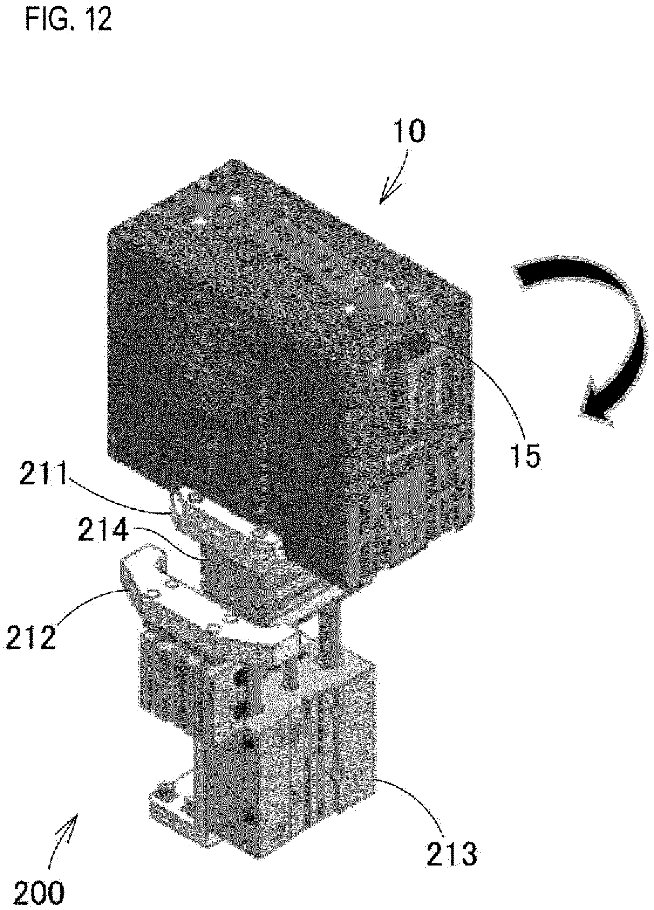

In the present embodiment, the banknote storage container 10 has an RFID tag 15 attached on its surface opposite to the lid 11 (refer to Fig. 12). When the RFID antenna 220 detects the RFID tag 15, the controller 100 controls the conveyor 201 to transport and pass the banknote storage container 10 directly to the conveyor 202 on the exit.

When the RFID antenna 220 detects no RFID tag 15, the controller 100 turns the turntable 211 by 180°, and controls the conveyor 201 to transport and pass the banknote storage container 10 to the conveyor 202 on the exit.

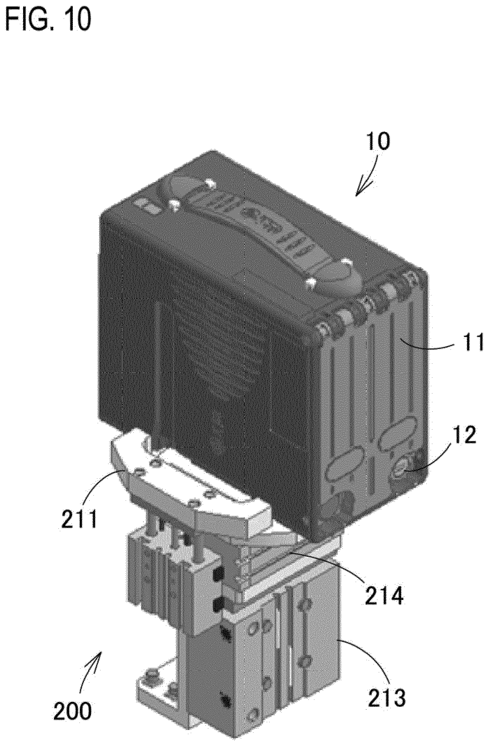

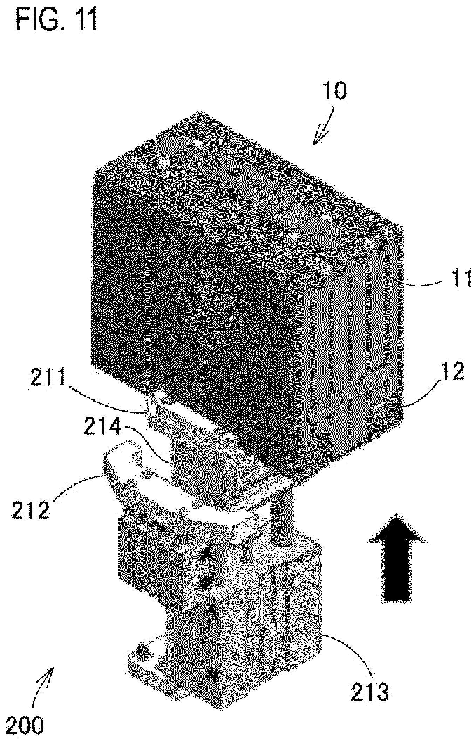

More specifically, as shown in Fig. 10, the banknote storage container 10 stops while touching the guide 212 of the reverser 210. In this state, as shown in Fig. 11, the controller 100 drives the lifting cylinder 213 to lift the turntable 211 and the banknote storage container 10 when the controller 100 receives a detection result indicating that no RFID tag 15 has been detected. As shown in Fig. 12, the controller 100 drives the turning cylinder 214 to rotate the turntable 211 and the banknote storage container 10 by 180°. After turning the table, the controller 100 lowers the lifting cylinder 213, and thus lowers the turntable 211 and the banknote storage container 10 to the level of the conveyor 201 as shown in Fig. 10.

The controller 100 then controls the conveyors 201 and 202 to transport the banknote storage container 10 to face the first arm 300 or the second arm 400.

### Structure of First Arm 300

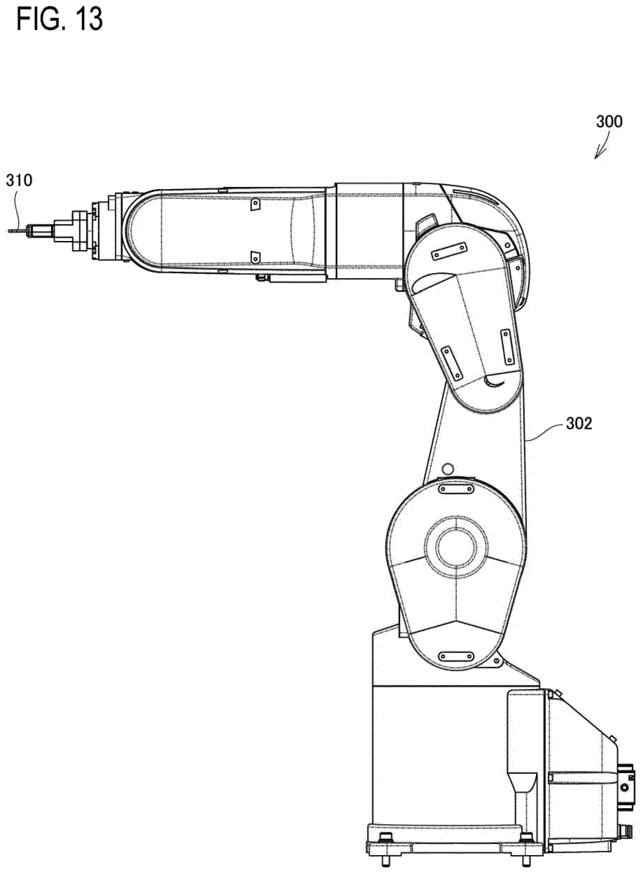

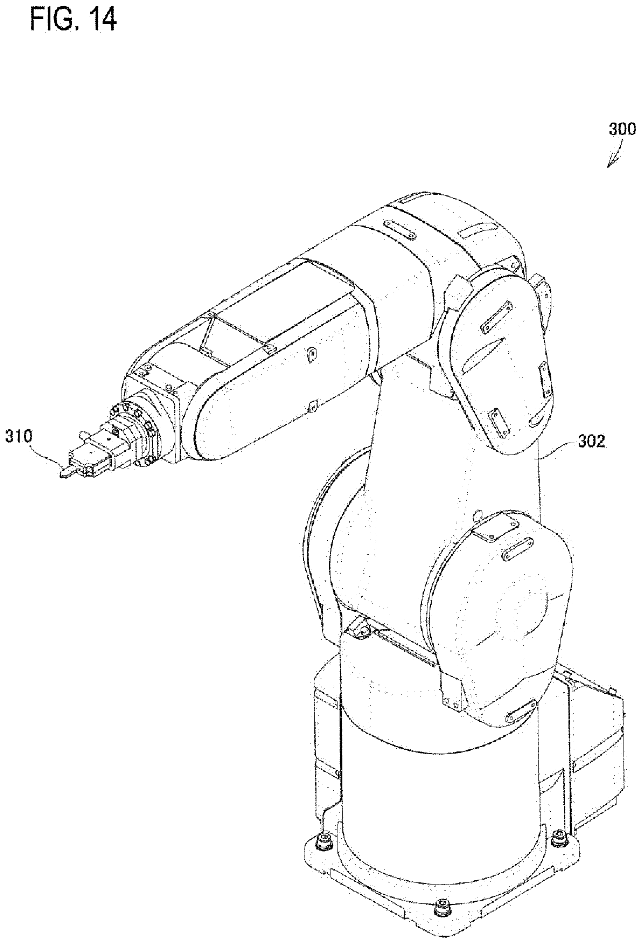

The structure of the first arm 300 will now be described. As shown in Figs. 13 and 14, the first arm 300 includes the key 310, and an arm body 302 for controlling the position, angle, or posture of the key 310. In response to a command from the controller 100, the first arm 300 drives a motor and an actuator contained in the arm body 302 to turn or move the key 310 for the banknote storage container 10 along six axes.

### Structure of Second Arm 400

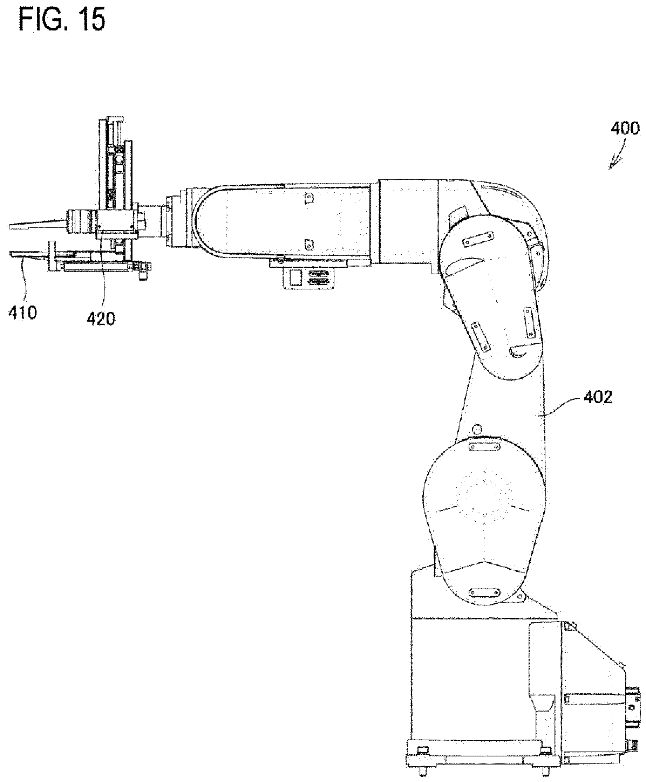

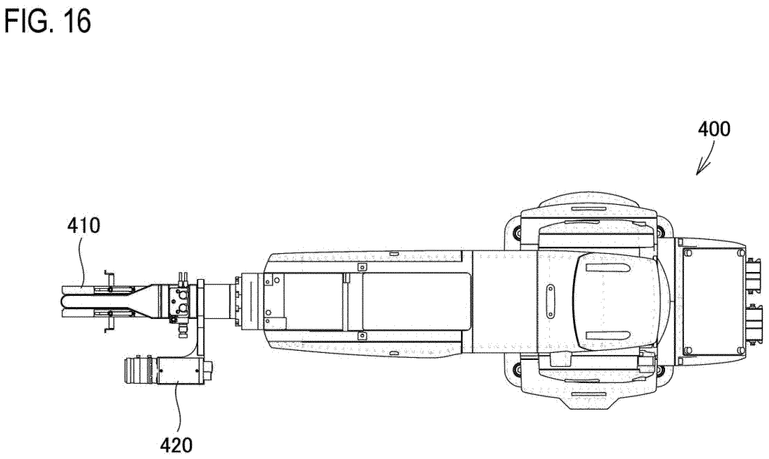

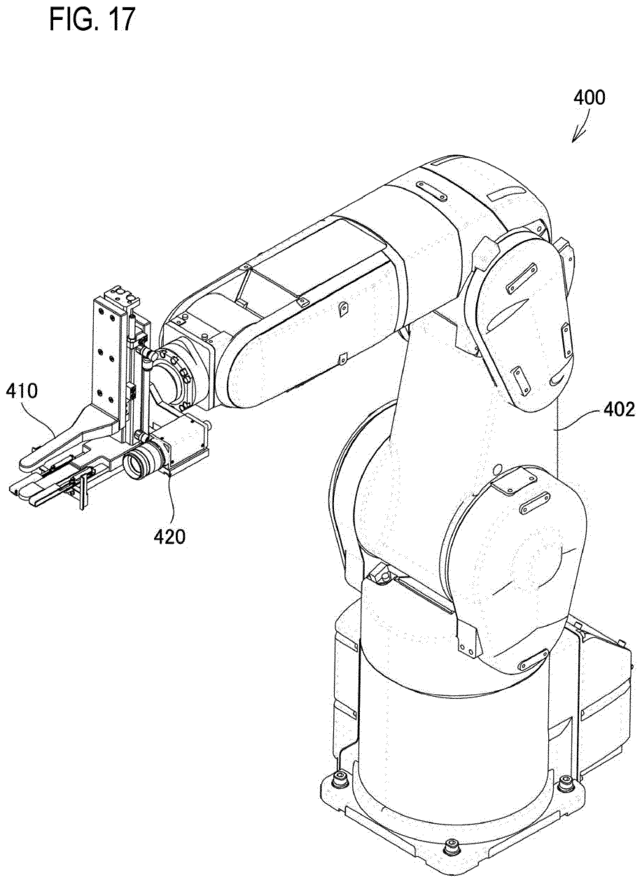

The structure of the second arm 400 will now be described. As shown in Figs. 15 to 17, the second arm 400 includes the gripper 410, the camera 420, and an arm body 402 for controlling the position, angle, or posture of the gripper 410. In response to a command from the controller 100, the second arm 400 drives a motor and an actuator contained in the arm body 402 to turn or move the gripper 410 for picking the banknotes and the camera 420 for imaging the keyhole 12 along six axes.

### Operation of First Arm 300 and Second Arm 400

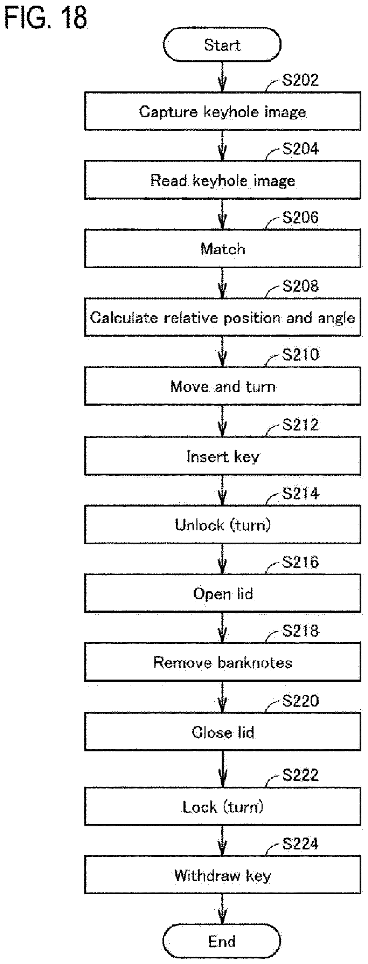

Referring now to Fig. 18, the control over the first arm 300 and the second arm 400 performed by the controller 100 will be described. In the present embodiment, the conveyor 202 on the exit transports the banknote storage container 10 to face the first arm 300 or the second arm 400. The controller 100 then performs the processing described below.

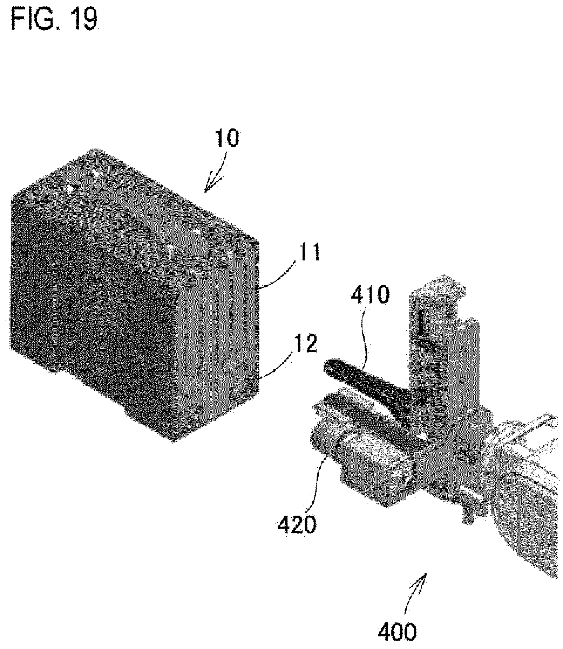

The CPU 110 in the controller 100 first controls the second arm 400 through the communication interface 160 to move the camera 420 to a position near and facing the banknote storage container 10 as shown in Fig. 19. The camera 420 captures an image of the front of the banknote storage container 10 (step S202).

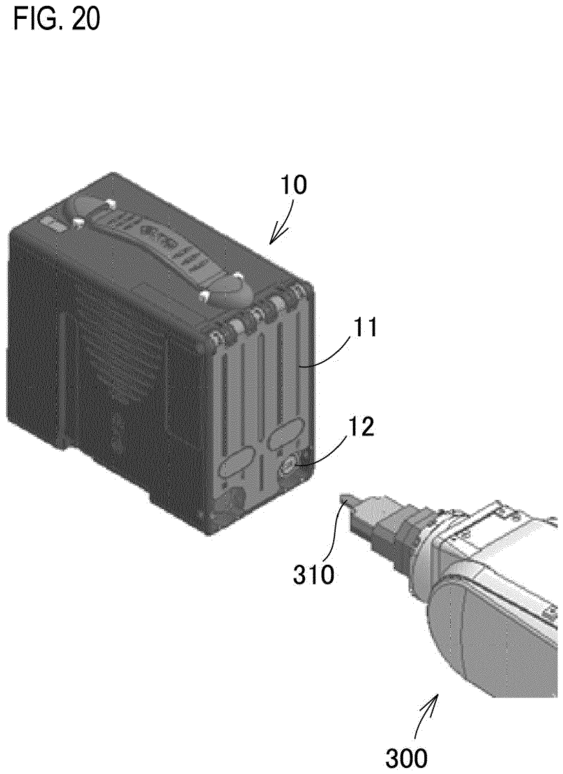

The CPU 110 in the controller 100 reads a reference image for the keyhole 12 from the memory 120 (step S204). The CPU 110 matches the image obtained from the camera 420 with the reference image for the keyhole 12, and determines the position of the keyhole 12 (step S206). The CPU 110 calculates the position of the keyhole 12 relative to the current position of the key 310 based on the matching result (step S208). The CPU 110 controls the first arm 300 through the communication interface 160 to move the key 310 to face the keyhole 12 as shown in Fig. 20 (step S210).

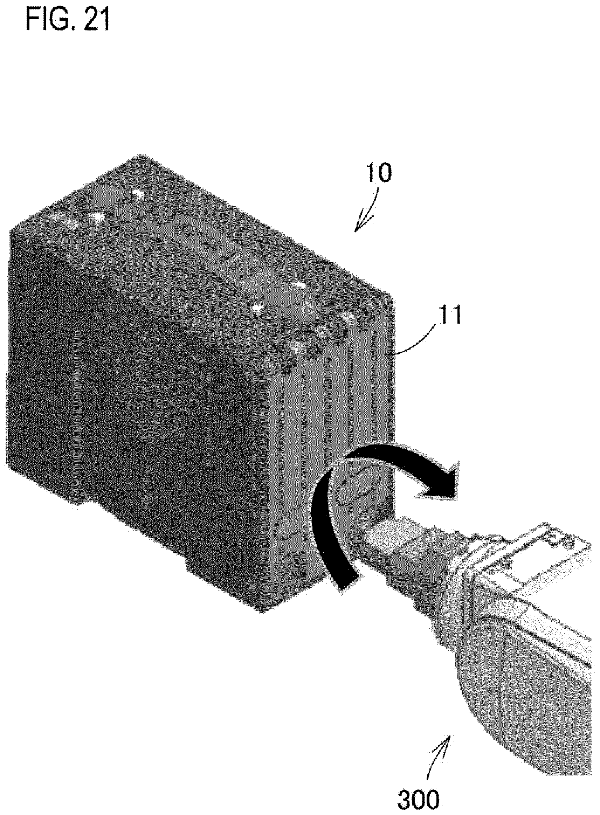

The CPU 110 controls the first arm 300 through the communication interface 160 to insert the key 310 into the keyhole 12 (step S212), and to turn the key 310 in an unlocking direction (step S214) as shown in Fig. 21. The CPU 110 controls the first arm 300 through the communication interface 160 to open the lid 11 of the banknote storage container 10 with the key 310 (step S216) as shown in Fig. 5. In this manner, the lid 11 of the banknote storage container 10 is automatically open.

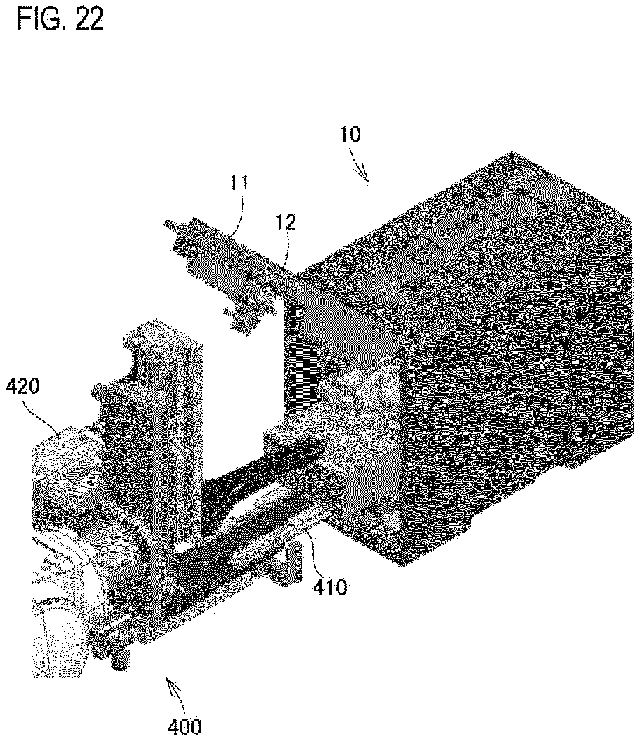

The CPU 110 controls the second arm 400 through the communication interface 160 to place the gripper 410 into the banknote storage container 10 and to remove the banknotes (step S218) as shown in Fig. 22. The second arm 400 then passes the banknotes to the banknote aligner 500.

The CPU 110 controls the first arm 300 through the communication interface 160 to close the lid 11 of the banknote storage container 10 with the key 310 (step S220). The CPU 110 controls the first arm 300 through the communication interface 160 to turn the key 310 in a locking direction (step S222) and withdraw the key 310 from the keyhole 12 of the banknote storage container 10 (step S224).

The controller 100 controls the conveyor 202 on the exit to move the locked empty banknote storage container 10 out of the automatic banknote handling system 1.

In this manner, the banknote storage container handling system 2 according to the present embodiment automatically unlocks the banknote storage container 10, opens the lid 11 of the banknote storage container 10, removes the banknotes stored in the banknote storage container 10, closes the lid 11 of the banknote storage container 10, and locks the banknote storage container 10.

### Second Embodiment

In the above embodiment, the first arm 300 includes the single key 310. The automatic banknote handling system 1 and the banknote storage container handling system 2 may include multiple different keys.

For example, the memory 120 in the controller 100 stores images of multiple different keyholes corresponding to the multiple different keys. In step S206 in Fig. 18, the CPU 110 compares the captured image of the keyhole with the multiple images of the keyholes stored in the memory 120, and determines the type of the keyhole, the type of the key, and the position of the keyhole. The first arm 300 may incorporate multiple selectable keys, or may have multiple keys placed near the first arm 300. In step S210 in Fig. 18, the CPU 110 controls the first arm 300 through the communication interface 160 to replace the key with a specified key 310. The CPU 110 controls the first arm 300 through the communication interface 160 to move the specified key 310 to face the keyhole 12 as shown in Fig. 20.

### Third Embodiment

In the above embodiment, the RFID tag 15 is attached to the surface of the banknote storage container 10 opposite to the lid 11. The RFID tag 15 may be attached to the surface of the banknote storage container 10 including the lid 11, and the RFID antenna 220 may be placed near the first arm 300.

In some embodiments, the RFID tag 15 may be attached to the surface of the banknote storage container 10 opposite to the lid 11, and the RFID antenna 220 may be placed near the first arm 300. In this case, the controller 100 turns the banknote storage container 10, and then transports the container 10 to the conveyor 202 on the exit when the RFID tag 15 is detected. When no RFID tag 15 is detected, the controller 100 directly transports the banknote storage container 10 to the conveyor 202 on the exit without turning the container 10.

The RFID tag 15 may be attached to the surface of the banknote storage container 10 having the lid 11, and the RFID antenna 220 may be placed opposite to the first arm 300. In this case, the controller 100 turns the banknote storage container 10, and then transports the container 10 to the conveyor 202 on the exit when the RFID tag 15 is detected. When no RFID tag 15 is detected, the controller 100 directly transports the banknote storage container 10 to the conveyor 202 on the exit without turning the container 10.

In some embodiments, the RFID tag 15 may be attached to each of the surface of the banknote storage container 10 having the lid 11 and its opposite surface. Each RFID tag 15 may store information for determining the surface with the lid 11 and the keyhole 12.

In some embodiments, the RFID tag 15 may not be used. The banknote storage container 10 may have, on its upper or side surface, a bar code or a specific image for determining the surface having the lid 11 and the keyhole 12. The RFID antenna 220 may be replaced by an optical sensor or a camera to determine the surface having the lid 11 and the keyhole 12.

In some embodiments, the RFID tag 15 may not be used. The banknote storage container 10 may have, on its upper or side surface, an irregularity shape to identify the surface having the lid 11 and the keyhole 12. A contact sensor, a proximity sensor, or an image sensor may be used to detect the shape to determine the surface having the lid 11 and the keyhole 12.

### Fourth Embodiment

In the above embodiment, the banknote storage container 10 includes the keyhole 12 in the lid 11. However, the banknote storage container 10 may not have the keyhole 12 in the lid 11, but may have the keyhole 12 in any other place.

### Fifth Embodiment

In the above embodiment, the banknote storage container 10 is turned by the reverser 210 to have the lid 11 facing the first arm 300. However, the controller 100 may control the first arm 300 to move the key 310 to the surface of the banknote storage container 10 having the keyhole 12 in correspondence with the position of the surface having the keyhole 12. More specifically, the first arm 300 may move the key 310 to the keyhole 12 beyond the banknote storage container 10 or the transporter 200.

In some embodiments, the first arms 300 may be located across the transporter 200. The first arm 300 facing the surface having the keyhole 12 may lock or unlock the banknote storage container 10.

### Sixth Embodiment

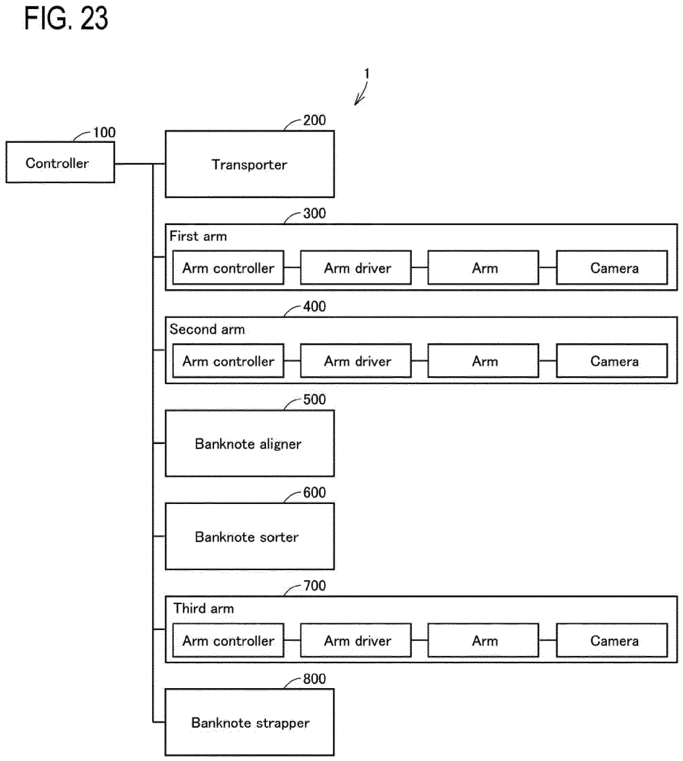

The above embodiment may be modified. The function of each of the units in the above embodiment may be achieved by another unit. The function of a single unit may be achieved by a plurality of units, or the functions of a plurality of units may be achieved by a single unit. As shown in Fig. 23, for example, a controller in the first arm 300 or in the second arm 400 may function as the controller 100. A CPU or a memory in the camera 420 may perform the processing in step S204 or step S206 in Fig. 18. The controller in the first arm 300 may perform the processing in step S208 or step S210 in Fig. 18.

### Seventh Embodiment

In the above embodiment, the camera 420 is mounted on the second arm 400. However, the camera 420 may be mounted on a third arm, which is separate from the gripper 410.

In some embodiments, the camera 420 may be mounted on the same first arm 300 as the key 310.

In some embodiments, the camera 420 may be immovable. In other words, the camera 420 may be fixed to a support placed on the base 50.

### Overview

A banknote storage container handling system 2 according to the above embodiment includes a transporter 200 that transports a banknote storage container, an unlock unit 300 located adjacent to the transporter 200 to unlock the banknote storage container 10, a detector 220 that searches the banknote storage container 10 for an identifier, and a controller 100 that determines a surface of the banknote storage container 10 having a keyhole 12 based on data obtained from the detector 220, and controls the unlock unit 300 to unlock the banknote storage container 10.

Preferably, the transporter 200 includes a turning unit 210 that turns the banknote storage container 10. The controller 100 controls the tuning unit 210 in accordance with a detection result for the identifier in the banknote storage container 10 from the detector 220 to have the surface of the banknote storage container 10 with the keyhole 12 facing the unlock unit 300.

Preferably, the controller 100 moves the unlock unit 300 to the surface of the banknote storage container 10 having the keyhole 12 in accordance with a detection result for the identifier in the banknote storage container 10 from the detector 220.

Preferably, the detector 220 includes a wireless communication antenna. The controller 100 determines the surface of the banknote storage container 10 having the keyhole 12 based on a radio wave from the identifier 15.

Preferably, the detector 220 includes an optical sensor or an image sensor. The controller 100 determines the surface of the banknote storage container 10 having the keyhole 12 based on reflected light from the identifier.

Preferably, the detector 220 includes a contact sensor or a proximity sensor. The controller 100 determines the surface of the banknote storage container 10 having the keyhole 12 based on a shape of the identifier.

The embodiments disclosed herein are only illustrative in all respects and should not be construed to be restrictive. The scope of the invention is not defined by the embodiments described above but is defined by the appended claims, and all changes that come within the meaning and range of equivalency of the claims are intended to fall within the claims.

### Reference Signs List

- 1: automatic banknote handling system
- 2: banknote storage container handling system (unlocking system)
- 10: banknote storage container
- 11: lid
- 12: keyhole
- 15: RFID tag
- 50: base
- 100: controller
- 110: CPU
- 120: memory
- 160: communication interface
- 200: transporter
- 201: first conveyor
- 202: second conveyor
- 210: reverser
- 211: turntable
- 212: guide
- 213: lifting cylinder
- 214: turning cylinder
- 215: guide cylinder
- 220: RFID antenna
- 221: proximity sensor
- 230: transfer unit
- 231: slide
- 232: slide
- 300: first arm
- 302: arm body
- 310: key
- 400: second arm
- 402: arm body
- 410: gripper
- 420: camera
- 500: banknote aligner
- 600: banknote sorter
- 700: third arm
- 710: gripper
- 800: banknote strapper
- 900: storage box

## Claims

1. A banknote storage container handling system, comprising:
a transporter that transports a banknote storage container;
an unlock unit located adjacent to the transporter to unlock the banknote storage container;
a detector that searches the banknote storage container for an identifier; and
a controller that determines a surface of the banknote storage container having a keyhole based on data obtained from the detector, and controls the unlock unit to unlock the banknote storage container.

2. The banknote storage container handling system according to claim 1, wherein
the transporter includes a turning unit that turns the banknote storage container, and
the controller controls the turning unit in accordance with a detection result for the identifier in the banknote storage container from the detector to have the surface of the banknote storage container with the keyhole facing the unlock unit.

3. The banknote storage container handling system according to claim 1, wherein
the controller moves the unlock unit to the surface of the banknote storage container having the keyhole in accordance with a detection result for the identifier in the banknote storage container from the detector.

4. The banknote storage container handling system according to any one of claims 1 to 3, wherein
the detector includes a wireless communication antenna, and
the controller determines the surface of the banknote storage container having the keyhole based on a radio wave from the identifier.

5. The banknote storage container handling system according to any one of claims 1 to 3, wherein
the detector includes an optical sensor or an image sensor, and
the controller determines the surface of the banknote storage container having the keyhole based on reflected light from the identifier.

6. The banknote storage container handling system according to any one of claims 1 to 3, wherein
the detector includes a contact sensor or a proximity sensor, and
the controller determines the surface of the banknote storage container having the keyhole based on a shape of the identifier.
